# EUROPEAN PATENT APPLICATION

(11) **EP 4 084 460 A1**
(43) Date of publication of application: **02.11.2022**
(21) Application number: 19958034.1
(22) Date of filing: 27.12.2019
(51) Int. Cl.: H04N 5/225, G03B 17/02, H04N 5/33, H04N 9/09

(54) **IMAGING DEVICE**

(71) Applicant: JAI Ltd., Yokohama-shi, Kanagawa 221-0052 (JP)
(72) Inventor: KUROTAKI, Shunsuke, Yokohama-shi, Kanagawa 221-0052 (JP); TAJIMA, Yoshio, Yokohama-shi, Kanagawa 221-0052 (JP); ASANO, Nagatake, Yokohama-shi, Kanagawa 221-0052 (JP); ISHII, Futoshi, Yokohama-shi, Kanagawa 221-0052 (JP); KATO, Taku, Yokohama-shi, Kanagawa 221-0052 (JP); TAKAHASHI, Hiroaki, Yokohama-shi, Kanagawa 221-0052 (JP)
(74) Representative: Forrest, Stuart
(86) International application number: PCT/JP2019/051548
(87) International publication number: WO 2021/131052

(57) **Abstract**

An imaging device is provided that can obtain information for accurately determining features such as properties and shape of each part of an object that is an imaging target.

The invention provides an imaging device including: a prism configured to split incident light into visible light and non-visible light and split the split non-visible light into a plurality of beams of infrared light having wavelength ranges different from each other; a visible light detection unit including a first solid-state imaging element configured to receive the visible light from the prism and photoelectrically convert the visible light; an infrared light detection unit including a plurality of second solid-state imaging elements each configured to receive a respectively one of the plurality of beams of infrared light from the prism and photoelectrically convert the respective one of the plurality of beams of infrared light; and a signal processing unit configured to process an electrical signal output from the visible light detection unit and/or the infrared light detection unit.

## Description

### Technical Field

The invention relates to an imaging device.

### Background Art

An imaging device of the related art has been known which includes a prism that splits incident light into a plurality of beams of light, and a plurality of solid-state imaging elements that respectively receive the plurality of beams of light split by the prism.

For example, PTL 1 discloses an imaging device including a prism that splits incident light into a plurality of beams of visible light and infrared light having wavelength ranges different from each other, and a plurality of solid-state imaging elements that respectively receive the plurality of beams of visible light and infrared light split by the prism.

### Citation List

### Patent Literature

PTL 1: JP-A-2017-205354

### Summary of Invention

### Technical Problem

However, in the imaging device of the related art, in particular, there is room for improvement in enhancing separability of information on an imaging target obtained in an infrared region.

Therefore, an object of the invention is to provide an imaging device capable of improving separability of information on an imaging target obtained in an infrared region.

### Solution to Problem

The invention provides an imaging device including:
a prism configured to split incident light into visible light and non-visible light and split the split non-visible light into a plurality of beams of infrared light having wavelength ranges different from each other;
a visible light detection unit including a first solid-state imaging element configured to receive the visible light from the prism and photoelectrically convert the visible light;
an infrared light detection unit including a plurality of second solid-state imaging elements each configured to receive a respective one of the plurality of beams of infrared light from the prism and photoelectrically convert the respective one of the plurality of beams of infrared light; and
a signal processing unit configured to process an electrical signal output from the visible light detection unit and/or the infrared light detection unit.

All the plurality of beams of infrared light may be near-infrared light.

The plurality of beams of infrared light may include first infrared light and second infrared light having no portion where wavelength ranges thereof overlap with each other, and the wavelength range of each of the first infrared light and the second infrared light may be in a range of 700 nm to 1000 nm.

The first solid-state imaging element may be a color solid-state imaging element.

The first solid-state imaging element may be a monochrome solid-state imaging element.

The signal processing unit may generate a color image or a monochrome image based on the electric signal from the visible light detection unit, and generate an IR image based on the electric signal from the infrared light detection unit.

The prism may include a first prism glass configured to split the incident light into the visible light and the non-visible light, a second prism glass disposed adjacent to the first prism glass, the second prism glass being configured to split the non-visible light split by the first prism glass into first infrared light and second infrared light having wavelength ranges different from each other, and a third prism glass disposed adjacent to the second prism glass, the third prism glass being configured to transmit the second infrared light from the second prism glass.

The first prism glass may include a first incident surface on which the incident light is incident, and a first dichroic film configured to reflect, toward the first incident surface, the visible light in the incident light transmitted through the first incident surface, and transmit the non-visible light, the first solid-state imaging element may receive the visible light totally reflected by the first incident surface, the second prism glass may include a second incident surface on which the non-visible light transmitted through the first dichroic film is incident, and a second dichroic film configured to reflect, toward the second incident surface, the first infrared light in the non-visible light transmitted through the second incident surface, and transmit the second infrared light, one second solid-state imaging element of the plurality of second solid-state imaging elements may receive the first infrared light totally reflected by the second incident surface, another second solid-state imaging element of the plurality of second solid-state imaging elements may receive the second infrared light transmitted through the second dichroic film, and the another second solid-state imaging element may receive the second infrared light transmitted through the third prism glass.

The prism may include a first prism glass configured to split the incident light into the visible light and the non-visible light, a second prism glass disposed adjacent to the first prism glass, the second prism glass being configured to split the non-visible light split by the first prism glass into first infrared light, and light having a wavelength range different from that of the first infrared light and including second infrared light and third infrared light having wavelength ranges different from each other, a third prism glass disposed adjacent to the second prism glass, the third prism glass being configured to split the light including the second infrared light and the third infrared light split by the second prism glass into the second infrared light and the third infrared light, and a fourth prism glass disposed adjacent to the third prism glass, the fourth prism glass being configured to transmit the third infrared light from the third prism glass.

The first prism glass may include
a first incident surface on which the incident light is incident, and
a first dichroic film configured to reflect, toward the first incident surface, the visible light of the incident light transmitted through the first incident surface, and transmit the non-visible light,
the first solid-state imaging element receives the visible light totally reflected by the first incident surface,

the second prism glass may include
   a second incident surface on which the non-visible light transmitted through the first dichroic film is incident, and
   a second dichroic film configured to reflect, toward the second incident surface, the first infrared light in the non-visible light transmitted through the second incident surface, and transmit the light including the second infrared light and the third infrared light,
one second solid-state imaging element of the plurality of second solid-state imaging elements may receive the first infrared light totally reflected by the second incident surface,
the third prism glass may include
   a third incident surface on which the light including the second infrared light and the third infrared light and transmitted through the second dichroic film is incident, and
   a third dichroic film configured to reflect, toward the third incident surface, the second infrared light in the light including the second infrared light and the third infrared light and transmitted through the third incident surface, and transmit the third infrared light,
another second solid-state imaging element of the plurality of second solid-state imaging elements may receive the second infrared light totally reflected by the third incident surface,
still another second solid-state imaging element of the plurality of second solid-state imaging elements may receive the third infrared light transmitted through the third dichroic film, and
the still another second solid-state imaging element receives the third infrared light transmitted through the fourth prism glass.

### Brief Description of Drawings

[FIG. 1] FIG. 1 is a diagram schematically showing a configuration of an imaging device according to a first embodiment of the invention.
[FIG. 2] FIG. 2 is a diagram showing an example of wavelength ranges of visible light, first infrared light, and second infrared light that are split by a prism of the imaging device according to the first embodiment of the invention.
[FIG. 3] FIG. 3 is a diagram schematically showing a configuration of an imaging device according to a second embodiment of the invention.
[FIG. 4] FIG. 4 is a diagram showing an example of wavelength ranges of visible light, first infrared light, second infrared light, and third infrared light that are split by a prism of the imaging device according to the second embodiment of the invention.

### Description of Embodiments

Hereinafter, preferred embodiments according to the invention will be described in detail with reference to the accompanying drawings. In the present description and the accompanying drawings, elements that have substantially the same functional configuration are denoted by the same reference numerals, and a redundant description of these elements will be omitted. Embodiments described below are representative embodiments of the invention, and the scope of the invention should not be narrowly interpreted based on these embodiments. Even when the present description states that an imaging device according to the invention provides a plurality of advantageous effects, the imaging device according to the invention may only have to provide at least one of the advantageous effects. The advantageous effects described in the present description are merely examples and are not limiting. Other advantageous effects may be provided.

The invention will be described in order as follows.
1. Introduction
2. Imaging Device according to First Embodiment of Invention
3. Imaging Device according to Second Embodiment of Invention
4. Modification of Invention

### 1. <Introduction>

The imaging device according to the invention is mainly used for inspection of a surface and/or an inside of an object that is an object to be imaged. Hereinafter, the object is also referred to as a subject.

Specific examples of the subject include a living body, medicine, water, food, and a package.

That is, the imaging device according to the invention is expected to be widely applied to, for example, a medical field including medicine component analysis and biological tissue inspection and observation, and a food field including food freshness determination inspection and foreign matter contamination inspection for food.

For example, when the imaging device according to the invention is mounted on a drone, it is also possible to image wide farmland from the sky in a wide range. At this time, the imaging device according to the invention can also detect, for example, a growth state of an agricultural product.

For example, when the imaging device according to the invention is used for inspection inside a living body, the imaging device is attached to, for example, an endoscope.

### 2. <Imaging Device according to First Embodiment of Invention>

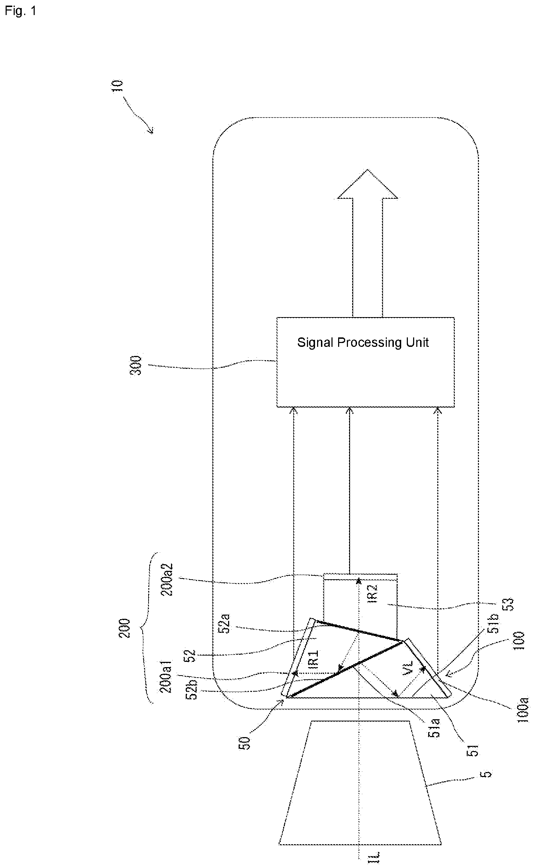

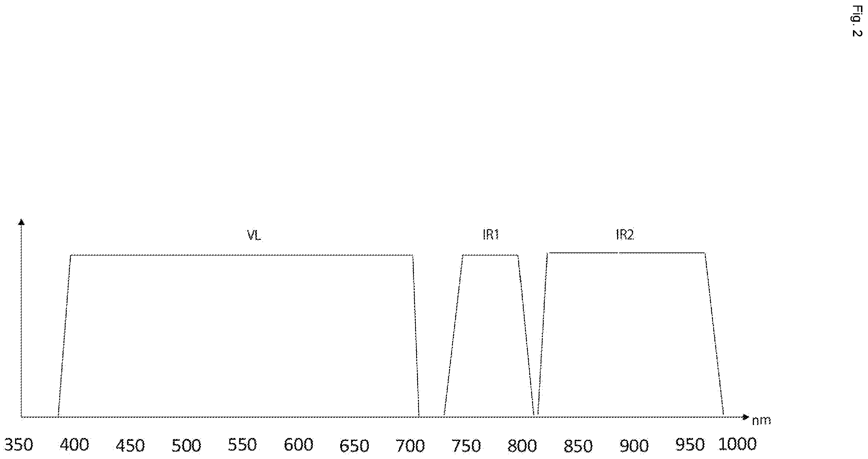

Hereinafter, an imaging device 10 according to the first embodiment of the invention will be described with reference to FIGS. 1 and 2. FIG. 1 schematically shows a configuration of the imaging device 10 according to the first embodiment of the invention. FIG. 2 shows wavelength ranges of a plurality of (for example, three) beams of light detected by the imaging device 10 according to the first embodiment of the invention.

As shown in FIG. 1, the imaging device 10 is, for example, a three-plate prism camera. The imaging device 10 includes a prism 50, a visible light detection unit 100, an infrared light detection unit 200, and a signal processing unit 300.

Further, the imaging device 10 includes a lens 5 at a previous stage of the prism 50. The lens 5 is not essential in the imaging device 10.

For example, the prism 50 splits incident light via the lens 5 into visible light and a plurality of beams of infrared light having wavelength ranges different from each other. Examples of the incident light include light (for example, natural light such as sunlight and artificial light such as illumination light) reflected by the subject and light emitted from the subject (for example, a light-emitting body and a fluorescent body).

For example, the prism 50 splits the incident light into visible light VL (for example, light in a wavelength range of 380 nm to 700 nm; the same applies below), first infrared light IR1, and second infrared light IR2.

Here, in general, a wavelength range of near-infrared light is about 700 nm to 2,500 nm, a wavelength range of mid-infrared light is about 2,500 nm to 4,000 nm, and a wavelength range of far-infrared light is, for example, about 4,000 nm to 1,000 µm.

For example, as shown in FIG. 2, both the first infrared light IR1 and the second infrared light IR2 are near-infrared light.

The first infrared light IR1 and the second infrared light IR2 have wavelength ranges completely different from each other. That is, the first infrared light IR1 and the second infrared light IR2 have no portion where the wavelength ranges thereof overlap with each other.

Furthermore, as an example, the wavelength range of the first infrared light IR1 is, for example, 710 nm to 810 nm, and the wavelength range of the second infrared light IR2 is, for example, 820 nm to 1,000 nm.

At least one of the first infrared light IR1 and the second infrared light IR2 may be light (mid-infrared light or far-infrared light) having a wavelength longer than that of the near-infrared light.

The visible light detection unit 100 includes a first solid-state imaging element 100a that receives the visible light VL split by the prism 50 and that photoelectrically converts the visible light VL. The first solid-state imaging element 100a is also referred to as an image sensor.

Here, a color solid-state imaging element that detects light of red (R), green (G), and blue (B) in the visible light VL is used as the first solid-state imaging element 100a.

The first solid-state imaging element 100a includes a plurality of pixels arranged two-dimensionally. As an example, each pixel includes a light-receiving element (for example, a photodiode), an on-chip lens that is disposed in front of the light-receiving element and that condenses light on the light-receiving element, and a color filter disposed between the light-receiving element and the on-chip lens. The color filter transmits any of the red light, the green light, and the blue light.

In the first solid-state imaging element 100a, the light-receiving element of each pixel converts the received color light (red light, green light, or blue light) into an electric signal and outputs the electric signal to the signal processing unit 300.

The infrared light detection unit 200 includes a plurality of (for example, two) second solid-state imaging elements 200a (200a1 and 200a2) that respectively receive a plurality of beams of infrared light (first infrared light IR1 and second infrared light IR2) which has been split by the prism 50 and which have wavelength ranges completely different from each other. Each second solid-state imaging element 200a is also referred to as an image sensor.

Here, a monochrome solid-state imaging element that receives corresponding infrared light is used as each second solid-state imaging element 200a. For a light-receiving element of the second solid-state imaging element 200a, for example, a material having high light-receiving sensitivity in a wavelength range of the corresponding infrared light is used.

The second solid-state imaging element 200a includes a plurality of pixels arranged two-dimensionally. For example, each pixel includes a light-receiving element (for example, a photodiode) and an on-chip lens that is disposed in front of the light-receiving element and that condenses light on the light-receiving element.

In the second solid-state imaging element 200a, the light-receiving element of each pixel converts the received corresponding infrared light (first infrared light IR1 or second infrared light IR2) into an electric signal and outputs the electric signal to the signal processing unit 300.

The signal processing unit 300 processes the electrical signals output from the visible light detection unit 100 and the infrared light detection unit 200.

Specifically, the signal processing unit 300 generates a color image based on the electrical signal from the visible light detection unit 100 (specifically, the electrical signal output from the first solid-state imaging element 100a), and generates an IR image based on the electrical signals from the infrared light detection unit 200 (for example, the electrical signals output from the second solid-state imaging elements 200a1 and 200a2).

Here, since reflectivity, absorbability, and transparency of light are different depending on a state, composition, and the like of substances constituting each part of the subject, a feature of each part is to be reflected in a captured image (for example, the color image and the IR image) to some extent.

However, for example, by viewing the color image of the subject, the feature of each part of the subject can be almost known based on color information of the color image, but it is not easy to determine whether each part is normal or abnormal.

Meanwhile, in the IR image of the subject, the feature (a difference in properties (chemical structure) or a difference in state) of each part of the subject that does not appear in the color image appears. Thus, it is possible to determine whether each part of the subject is normal or abnormal by viewing the IR image of the subject.

Therefore, it is preferable that the signal processing unit 300 generates an image in which the IR image is superimposed on the color image. When the IR image is superimposed on the color image, it is possible to determine an abnormal part (for example, a scratch, a tumor, and a fragile portion) that cannot be distinguished from a surrounding normal part only based on the color image of the subject.

In a plurality of IR images obtained by receiving a plurality of beams of infrared light having wavelength ranges different from each other for each pixel, images of each part of the subject do not necessarily coincide with each other. That is, in each IR image, the feature of each part of the subject may appear or may not appear depending on the wavelength range of the infrared light that is a source of the IR image.

In other words, since the first infrared light and the second infrared light have different wavelength ranges, it is possible to reflect the feature of each part of the subject in a final output image in more detail by superimposing, on the color image, an IR image (hereinafter referred to as an IR image 1) generated based on the first infrared light received by the second solid-state imaging elements 200a for each pixel and an IR image (hereinafter referred to as an IR image 2) generated based on the second infrared light received by the second solid-state imaging element 200b for each pixel. In this way, according to the imaging device 10, separability of information on an imaging target obtained in an infrared region can be improved.

For example, the imaging device 10 may be used for an application of determining whether each part of the subject is abnormal based on presence or absence of fluorescence when the part is irradiated with excitation light. More specifically, in this application, a part that reflects the excitation light as it is is determined as a normal part, and a part that absorbs the excitation light and emits fluorescence (light having a wavelength longer than that of the excitation light) is determined as an abnormal part.

In this case, a wavelength range (infrared region) of the excitation light is different from a wavelength range (infrared region having wavelengths longer than that of the excitation light) of the fluorescence, and a light amount of the fluorescence is much smaller than that of the excitation light. Thus, it is required to improve the separability of the information on the imaging target obtained in the infrared region.

For example, when the excitation light coincides with the first infrared light IR1 and the fluorescence coincides with the second infrared light IR2, the imaging device 10 can detect the first infrared light IR1 and the second infrared light IR2 individually (can improve the separability of the information on the imaging target obtained in the infrared region). Therefore, it is possible to determine whether each part of the subject is irradiated with the excitation light and whether the part emits fluorescence. That is, it is possible to determine whether the fluorescence occurs at the part where it is confirmed that the part is actually irradiated with the excitation light.

On the other hand, in a case where whether the fluorescence occurs is determined using a single beam of infrared light, the excitation light and the fluorescence cannot be distinguished when the infrared light in a wavelength range including wavelengths of the excitation light (infrared region) and the fluorescence (infrared region having a wavelength longer than that of the excitation light) is detected. Thus, for example, only the fluorescence is detected without detecting the excitation light. In this case, consistency between the part irradiated with the excitation light and the part emitting the fluorescence cannot be checked, and reliability of the determination is low.

Therefore, it is more preferable that the signal processing unit 300 superimposes, on the color image, the IR images (the IR image 1 and the IR image 2) generated based on the electric signals output from the plurality of second solid-state imaging elements 200a (for example, the second solid-state imaging elements 200a1 and 300a2).

In this case, it is also possible to determine an abnormal part that cannot be determined based on one of the IR image 1 and the IR image 2.

Further, reflected light from the same part of the subject includes the visible light VL, and the three (color image, IR image 1, and IR image 2) are superimposed using the imaging device 10 including the prism 50. Thus, the three images at the same part of the subject can be superimposed as they are. That is, the three images can be accurately and easily superimposed using one imaging device 10.

On the other hand, for example, when three images of the same part of a subject are superimposed using three imaging devices (for example, cameras) that capture the three images, it is required to accurately position the three cameras such that the same part of the subject can be imaged, or to extract images of the same part from the three images and superimpose the images. In this case, cost increases and control or processing becomes complicated.

The color image and/or the IR images may be generated by an external device for generating images, rather than the signal processing unit 300.

For example, the signal processing unit 300 may transfer the electrical signal from the visible light detection unit 100 and/or the electrical signals from the infrared light detection unit 200 to the external device.

The signal processing unit 300 includes, for example, a central processing unit (CPU) and a field programable gate array (FPGA).

Hereinafter, the configuration of the imaging device 10 will be described in more detail.

Referring back to FIG. 1, the prism 50 includes a first prism glass 51 that splits incident light IL into the visible light VL and the light (non-visible light) including the first infrared light IR1 and the second infrared light IR2 having the wavelength ranges different from each other, and a second prism glass 52 that is disposed adjacent to the first prism glass 51 and that splits the non-visible light split by the first prism glass 51 into the first infrared light IR1 and the second infrared light IR2.

The first prism glass 51 has a first incident surface 51b on which the incident light IL is incident, and a first dichroic film 51a provided on a surface facing the first incident surface 51b.

The first dichroic film 51a reflects the visible light VL (for example, light in a wavelength range of 380 nm to 700 nm) in the incident light IL toward the first incident surface 51b, and transmits the light (non-visible light, for example, infrared light having wavelengths of 710 nm or more) including the first infrared light IR1 and the second infrared light IR2. In this way, it is possible to prevent crosstalk between the visible light VL and the first infrared light IR1 by setting a difference between an upper limit of the wavelength range of the visible light VL and a lower limit of the wavelength range of the first infrared light IR1 to, for example, 10 nm.

The visible light VL reflected by the first dichroic film 51a is incident on the first incident surface 51b at an incident angle (critical angle) at which the visible light VL is totally reflected by the first incident surface 51b.

The visible light VL totally reflected by the first incident surface 51b is transmitted through a surface of the first prism glass 51 connecting the first incident surface 51b with the surface on which the first dichroic film 51a is provided, and is incident on the first solid-state imaging element 100a.

The second prism glass 52 includes a second incident surface 52b on which the non-visible light transmitted through the first dichroic film 51a is incident, and a second dichroic film 52a provided on a surface facing the second incident surface 52b.

The second dichroic film 52a reflects, toward the second incident surface 52b, the first infrared light IR1 (for example, light in a wavelength range of 710 nm to 820 nm) in the non-visible light transmitted through the first dichroic film 51a, and transmits the second infrared light IR2 (for example, light in a wavelength range of 830 nm to 1,000 nm). In this way, it is possible to prevent crosstalk between the first infrared light IR1 and the second infrared light IR2 by setting a difference between an upper limit of the wavelength range of the first infrared light IR1 and a lower limit of the wavelength range of the second infrared light IR2 to, for example, 10 nm.

The first infrared light IR1 reflected by the second dichroic film 52a is incident on the second incident surface 52b at an incident angle (an incident angle larger than the critical angle) at which the first infrared light IR1 is totally reflected by the second incident surface 52b.

The first infrared light IR1 totally reflected by the second incident surface 52b is transmitted through a surface of the second prism glass 52 connecting the second incident surface 52b with the surface on which the second dichroic film 52a is provided, and is incident on the second solid-state imaging element 200a1.

The prism 50 further includes a third prism glass 53 that is disposed adjacent to the second prism glass 52 and transmits the second infrared light IR2 (transmitted through the second dichroic film 52a) from the second prism glass 52 as it is.

The second infrared light IR2 transmitted through the third prism glass 53 is incident on another second solid-state imaging element 200a2.

### 3. <Imaging Device according to Second Embodiment of Invention>

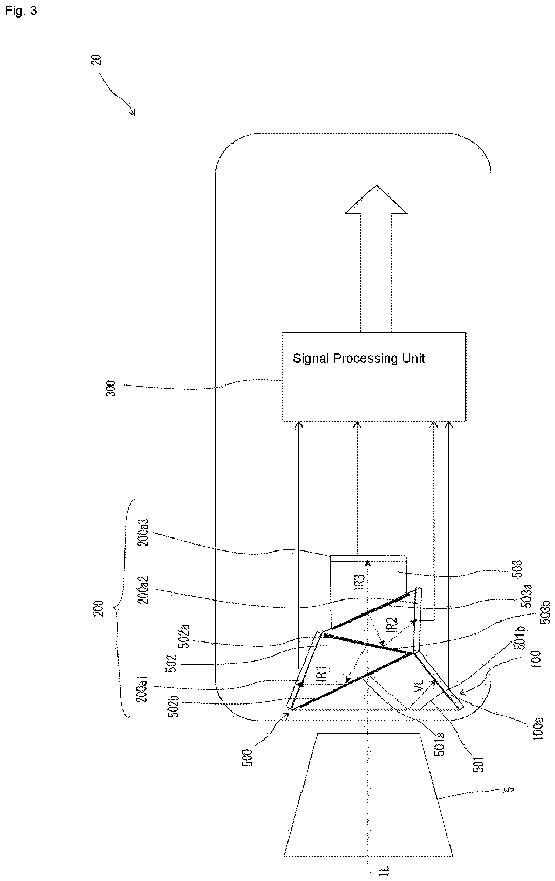

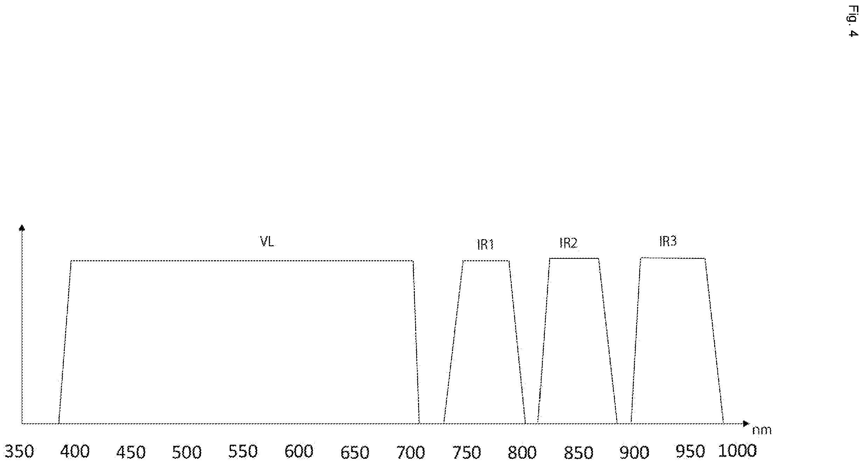

Hereinafter, an imaging device 20 according to the second embodiment of the invention will be described with reference to FIGS. 3 and 4.

As shown in FIG. 3, the imaging device 20 is a four-plate prism camera in which a prism includes four prism glasses.

In the imaging device 20, a prism 500 includes a first prism glass 501 that splits incident light IL into visible light VL and light (non-visible light) including first infrared light IR1, second infrared light IR2, and third infrared light IR3 having wavelength ranges different from each other, a second prism glass 502 that is disposed adjacent to the first prism glass 501 and that splits the non-visible light split by the first prism glass 501 into the first infrared light IR1 and light including the second infrared light IR2 and the third infrared light IR3, and a third prism glass 503 that is disposed adjacent to the second prism glass 502 and that splits the light split by the second prism glass 502 and including the second infrared light IR2 and the third infrared light IR3 into the second infrared light IR2 and the third infrared light IR3.

For example, as shown in FIG. 4, all of the first infrared light IR1, the second infrared light IR2, and the third infrared light IR3 are near-infrared light. Among the first infrared light IR1, the second infrared light IR2, and the third infrared light IR3, a wavelength range of the first infrared light IR1 is the shortest wavelength range, and a wavelength range of the third infrared light IR3 is the longest wavelength range.

The first prism glass 501 has a first incident surface 501b on which the incident light IL is incident, and a first dichroic film 501a provided on a surface facing the first incident surface 501b.

The first dichroic film 501a reflects, toward the first incident surface 501b, the visible light VL (for example, light in a wavelength range of 380 nm to 700 nm) in the incident light IL transmitted through the first incident surface 501b, and transmits the light (non-visible light, for example, light having a wavelength of 710 nm or more) including the first infrared light IR1, the second infrared light IR2, and the third infrared light IR3. In this way, it is possible to prevent crosstalk between the visible light VL and the first infrared light IR1 by setting a difference between an upper limit of the wavelength range of the visible light VL and a lower limit of the wavelength range of the first infrared light IR1 to, for example, 10 nm or more.

The visible light VL reflected by the first dichroic film 501a is incident on the first incident surface 501b at an incident angle (an incident angle larger than a critical angle) at which the visible light VL is totally reflected by the first incident surface 501b.

The visible light VL totally reflected by the first incident surface 501b is transmitted through a surface of the first prism glass 501 connecting the first incident surface 501b with the surface on which the first dichroic film 501a is provided, and is incident on the first solid-state imaging element 100a.

The second prism glass 502 has a second incident surface 502b on which the light (non-visible light) including the first infrared light IR1, the second infrared light IR2, and the third infrared light IR3 and transmitted through the first dichroic film 501a is incident, and a second dichroic film 502a facing the second incident surface 502b.

The second dichroic film 502a reflects, toward the second incident surface 502b, the first infrared light IR1 (for example, light in a wavelength range of 710 nm to 800 nm) in the light (non-visible light) including the first infrared light IR1, the second infrared light IR2, and the third infrared light IR3 and transmitted through the second incident surface 502b, and transmits the second infrared light IR2 and the third infrared light IR3 (for example, light having a wavelength of 810 nm or more). In this way, it is possible to prevent crosstalk between the first infrared light IR1 and the second infrared light IR2 by setting a difference between an upper limit of the wavelength range of the first infrared light IR1 and a lower limit of the wavelength range of the second infrared light IR2 to, for example, 10 nm or more.

The first infrared light IR1 reflected by the second dichroic film 502a is incident on the second incident surface 502b at an incident angle (an incident angle larger than the critical angle) at which the first infrared light IR1 is totally reflected by the second incident surface 502b.

The first infrared light IR1 totally reflected by the second incident surface 502b is transmitted through a surface of the second prism glass 502 connecting the second incident surface 502b with the surface on which the second dichroic film 502a is provided, and is incident on the second solid-state imaging element 200a1.

The third prism glass 503 includes a third incident surface 503b on which the light including the second infrared light IR2 and the third infrared light IR3 and transmitted through the second dichroic film 501a is incident, and a third dichroic film 503a facing the third incident surface 503b.

The third dichroic film 503a reflects, toward the third incident surface 503b, the second infrared light IR2 (for example, light in a wavelength range of 810 nm to 900 nm) in the light including the second infrared light IR2 and the third infrared light IR3 and transmitted through the incident surface 503b, and transmits the third infrared light IR3 (for example, light having a wavelength of 910 nm to 1,000 nm). In this way, it is possible to prevent crosstalk between the second infrared light IR2 and the third infrared light IR3 by setting a difference between an upper limit of the wavelength range of the second infrared light IR2 and a lower limit of the wavelength range of the third infrared light IR3 to, for example, 10 nm or more.

The second infrared light IR2 reflected by the third dichroic film 503a is incident on the third incident surface 503b at an incident angle (an incident angle larger than the critical angle) at which the second infrared light IR2 is totally reflected by the third incident surface 503b.

The second infrared light IR2 totally reflected by the third incident surface 503b is transmitted through a surface of the third prism glass 503 connecting the second incident surface 503b with the surface on which the second dichroic film 503a is provided, and is incident on another second solid-state imaging element 200a2.

The third infrared light IR3 transmitted through the third dichroic film 503a is incident on still another second solid-state imaging element 200a3.

The prism 500 includes a fourth prism glass 504 that is disposed adjacent to the third prism glass 503 and transmits the third infrared light IR3 from the third prism glass 503 as it is, and the still another second solid-state imaging element 200a3 receives the third infrared light IR3 transmitted through the fourth prism glass 504.

### 4. <Modification of Invention>

The invention is not limited to the above embodiments, and various modifications may be made.

For example, in the above embodiments, as an example of the imaging device according to the invention, the three-plate or four-plate prism camera has been described. The invention is also applicable to a five-plate or more-plate prism camera.

In the above embodiments, as the first solid-state imaging element, a color solid-state imaging element is used. The invention is not limited thereto.

For example, three first solid-state imaging elements each detecting a respective one of beams of light of R, G, and B may be provided. In this case, it is required to receive a plurality of beams of infrared light having different wavelength ranges using a five-plate or more-plate prism camera as the imaging device.

For example, a first solid-state imaging element detecting light of two colors of R, G, and B and a first solid-state imaging element detecting light of the one remaining color may be used. In this case, it is required to receive a plurality of beams of infrared light having different wavelength ranges using a four-plate or more-plate prism camera as the imaging device.

For example, only a first solid-state imaging element detecting light of one color of R, G, and B may be used. In this case, it is required to receive a plurality of beams of infrared light having different wavelength ranges using a three-plate or more-plate prism camera as the imaging device.

In the above embodiments, the signal processing unit 300 processes all signals of respective colors from the visible light detection unit and a plurality of infrared light signals from the infrared light detection unit to generate the color image and the IR images. Alternatively, the signal processing unit 300 may selectively process only at least two signals of these plural signals as necessary to generate an image (for example, a color image and/or an IR image).

In the above embodiments, the prism extracts the visible light VL, the first infrared light IR1, and the second infrared light IR2 in this order. This order may be changed.

In the above embodiments, the wavelength ranges of the respective beams of infrared light may be changed as appropriate.

For example, in the above first embodiment, the wavelength range of the first infrared light IR1 may be within a range of 700 nm to 1,000 nm, and the wavelength range of the second infrared light IR2 may be within a range of 1,000 nm to 2,500 nm.

For example, in the above first embodiment, the wavelength range of the first infrared light IR1 may be within a range of 700 nm to 2,500 nm, and the wavelength range of the second infrared light IR2 may be within a range of 2,500 nm to 4,000 nm.

For example, in the above first embodiment, the wavelength range of the first infrared light IR1 may be within a range of 700 nm to 4,000 nm, and the wavelength range of the second infrared light IR2 may be within a range of 4,000 nm to 1,000 µm.

For example, in the above second embodiment, the wavelength range of the first infrared light IR1 may be within the range of 700 nm to 1,000 nm, and the wavelength ranges of the second infrared light IR2 and the third infrared light IR3 may be within the range of 1,000 nm to 2,500 nm.

For example, in the above second embodiment, the wavelength range of the first infrared light IR1 may be within the range of 700 nm to 1,000 nm, the wavelength range of the second infrared light IR2 may be within the range of 1,000 nm to 2,500 nm, and the wavelength range of the third infrared light IR3 may be within the range of 2,500 nm to 4,000 nm.

For example, in the above second embodiment, the wavelength range of the first infrared light IR1 may be within the range of 700 nm to 2,500 nm, the wavelength range of the second infrared light IR2 may be within the range of 2,500 nm to 4,000 nm, and the wavelength range of the third infrared light IR3 may be within the range of 4,000 nm to 1,000 µm.

For example, when a beam of visible light VL and beams of first to fourth infrared light (four beams of infrared light) are detected using the five-plate prism camera, the wavelength range of the first infrared light IR1 may be within the range of 700 nm to 1,000 nm, the wavelength range of the second infrared light IR2 may be within the range of 1,000 nm to 2,500 nm, the wavelength range of the third infrared light IR3 may be within the range of 2,500 nm to 4,000 nm, and a wavelength range of fourth infrared light IR4 may be within the range of 4,000 nm to 1,000 µm.

For example, the first solid-state imaging element of the imaging device according to the above embodiments may not include at least one of the color filter and the on-chip lens. For example, when the first solid-state imaging element is used to generate a monochrome image, the first solid-state imaging element may not include the color filter. That is, the first solid-state imaging element may be a monochrome solid-state imaging element.

### Reference Signs List

10, 20: imaging device; 50, 500: prism; 51, 501: first prism glass; 52, 502: second prism glass; 53, 503: third prism glass; 504: fourth prism glass; 51a, 501a: first dichroic film; 51b, 501b: first incident surface; 52a, 502a: second dichroic film; 52b, 502b: second incident surface; 503a: third dichroic film; 503b: third incident surface; and 300: signal processing unit.

## Claims

1. An imaging device comprising:
a prism configured to split incident light into visible light and non-visible light and split the split non-visible light into a plurality of beams of infrared light having wavelength ranges different from each other;
a visible light detection unit including a first solid-state imaging element configured to receive the visible light from the prism and photoelectrically convert the visible light;
an infrared light detection unit including a plurality of second solid-state imaging elements each configured to receive a respectively one of the plurality of beams of infrared light from the prism and photoelectrically convert the respective one of the plurality of beams of infrared light; and
a signal processing unit configured to process an electrical signal output from the visible light detection unit and/or the infrared light detection unit.

2. The imaging device according to claim 1, wherein
all the plurality of beams of infrared light are near-infrared light.

3. The imaging device according to claim 1 or 2, wherein,
the plurality of beams of infrared light include first infrared light and second infrared light having no portion where wavelength ranges thereof overlap with each other, and
the wavelength range of each of the first infrared light and the second infrared light are in a range of 700 nm to 1000 nm.

4. The imaging device according to any one of claims 1 to 3, wherein
the first solid-state imaging element is a color solid-state imaging element.

5. The imaging device according to any one of claims 1 to 3, wherein
the first solid-state imaging element is a monochrome solid-state imaging element.

6. The imaging device according to any one of claims 1 to 5, wherein
the signal processing unit
generates a color image or a monochrome image based on the electric signal from the visible light detection unit, and
generates an IR image based on the electric signal from the infrared light detection unit.

7. The imaging device according to any one of claims 1 to 6, wherein
the prism includes
a first prism glass configured to split the incident light into the visible light and the non-visible light,
a second prism glass disposed adjacent to the first prism glass, the second prism glass being configured to split the non-visible light split by the first prism glass into first infrared light and second infrared light having wavelength ranges different from each other, and
a third prism glass disposed adjacent to the second prism glass, the third prism glass being configured to transmit the second infrared light from the second prism glass.

8. The imaging device according to claim 7, wherein
the first prism glass includes
a first incident surface on which the incident light is incident, and
a first dichroic film configured to reflect, toward the first incident surface, the visible light in the incident light transmitted through the first incident surface, and transmit the non-visible light,
the first solid-state imaging element receives the visible light totally reflected by the first incident surface,
the second prism glass includes
a second incident surface on which the non-visible light transmitted through the first dichroic film is incident, and
a second dichroic film configured to reflect, toward the second incident surface, the first infrared light in the non-visible light transmitted through the second incident surface, and transmit the second infrared light,
one second solid-state imaging element of the plurality of second solid-state imaging elements receives the first infrared light totally reflected by the second incident surface,
another second solid-state imaging element of the plurality of second solid-state imaging elements receives the second infrared light transmitted through the second dichroic film, and
the another second solid-state imaging element receives the second infrared light transmitted through the third prism glass.

9. The imaging device according to any one of claims 1 to 6, wherein
the prism includes
a first prism glass configured to split the incident light into the visible light and the non-visible light,
a second prism glass disposed adjacent to the first prism glass, the second prism glass being configured to split the non-visible light split by the first prism glass into first infrared light, and light having a wavelength range different from that of the first infrared light and including second infrared light and third infrared light having wavelength ranges different from each other,
a third prism glass disposed adjacent to the second prism glass, the third prism glass being configured to split the light including the second infrared light and the third infrared light split by the second prism glass into the second infrared light and the third infrared light, and
a fourth prism glass disposed adjacent to the third prism glass, the fourth prism glass being configured to transmit the third infrared light from the third prism glass.

10. The imaging device according to claim 9, wherein
the first prism glass includes
a first incident surface on which the incident light is incident, and
a first dichroic film configured to reflect, toward the first incident surface, the visible light of the incident light transmitted through the first incident surface, and transmit the non-visible light,
the first solid-state imaging element receives the visible light totally reflected by the first incident surface,
the second prism glass includes
a second incident surface on which the non-visible light transmitted through the first dichroic film is incident, and
a second dichroic film configured to reflect, toward the second incident surface, the first infrared light in the non-visible light transmitted through the second incident surface, and transmit the light including the second infrared light and the third infrared light,
one second solid-state imaging element of the plurality of second solid-state imaging elements receives the first infrared light totally reflected by the second incident surface,
the third prism glass includes
a third incident surface on which the light including the second infrared light and the third infrared light and transmitted through the second dichroic film is incident, and
a third dichroic film configured to reflect, toward the third incident surface, the second infrared light in the light including the second infrared light and the third infrared light and transmitted through the third incident surface, and transmit the third infrared light,
another second solid-state imaging element of the plurality of second solid-state imaging elements receives the second infrared light totally reflected by the third incident surface,
still another second solid-state imaging element of the plurality of second solid-state imaging elements receives the third infrared light transmitted through the third dichroic film, and
the still another second solid-state imaging element receives the third infrared light transmitted through the fourth prism glass.
